# EUROPÄISCHE PATENTANMELDUNG

(11) **EP 1 493 365 A1**
(43) Veröffentlichungstag der Anmeldung: **05.01.2005**
(21) Anmeldenummer: 03291640.5
(22) Anmeldetag: 03.07.2003
(51) Int. Cl.: A47J 27/08, A47J 36/38

(54) **Tiegel und Verfahren zum Betreiben des Tiegels**

(71) Anmelder: FRIMA SA, 68271 Wittenheim Cedex (FR); Rational AG, 86899 Landsberg/Lech (DE)
(72) Erfinder: Wagner, Stefan, 68127 Oberhergheim (FR); Michineau, Serge, 68190 Ensheim (FR); Wiedemann, Peter, 86836 Klosterlechfeld (DE)
(74) Vertreter: Weber-Bruls, Dorothée, Dr.

(57) **Zusammenfassung**

Die Erfindung bezieht sich auf einen Tiegel (1) zum Garen eines Lebensmittels sowie ein Verfahren zum Betreiben des Tiegels (1). Der Tiegel (1) umfaßt einen Garraum (3), welcher in einem Garbehälter (2) gebildet ist, und einen Deckel (4), der zwischen einer geöffneten Stellung, in welcher der Garraum (3) geöffnet ist, und einer geschlossenen Stellung verlagerbar ist, in welcher der Garraum (3) geschlossen ist. Es sind Dichtmittel zum überdruckdichten Schließen des Garraums (3) vorgesehen, wenn der Deckel (4) in der geschlossenen Stellung ist, so daß in dem Garraum (3) ein Druckgaren des Lebensmittels ausgeführt werden kann.

## Beschreibung

Die Erfindung bezieht sich auf einen Tiegel und ein Verfahren zum Betreiben des Tiegels zum Garen einer Speise.

Tiegel werden für die Zubereitung oder besser Garen von verschiedenen Lebensmitteln genutzt. Üblicherweise weist der Tiegel einen Garraum, welcher in einem Garbehälter gebildet ist, und einen Deckel auf, mit dem der Garraum abgedeckt werden kann. Der Deckel kann zwischen einer geöffneten Stellung, in welcher der Garraum geöffnet ist, um das Lebensmittel in dem Garraum einzubringen oder aus diesem zu entnehmen, und einer geschlossenen Stellung verlagert werden, in welcher der Garraum zum Garen des Lebensmittels geschlossen ist. Bekannte Tiegel verfügen üblicherweise über eine Öffnung in der Wandung des Garbehälters oder im Deckel, so daß beim Garen entstehender Dampf aus dem Garraum abgeleitet werden kann.

Aufgabe der Erfindung ist es, einen verbesserten Tiegel und ein verbessertes Verfahren zum Betreiben des Tiegels anzugeben, die die Effizienz des Garprozesses beim Garen eines Lebensmittels in dem Garraum verbessern.

Diese Aufgabe wird erfindungsgemäß durch einen Tiegel nach dem unabhängigen Anspruch 1 und ein Verfahren nach dem unabhängigen Anspruch 15 gelöst.

Die Erfindung umfaßt den Gedanken, den Garraum des Tiegels in dem Garbehälter mit Hilfe von Dichtmitteln überdruckdicht abzuschließen, wenn der Deckel in der geschlossenen Stellung ist, so daß das Lebensmittel in dem Garraum druckgegart werden kann. Die Nutzung des Druckgarens in einem Tiegel verbessert den Wirkungsgrad des Garprozesses, da zusätzlich zur Wärmebeaufschlagung des zuzubereitenden Lebensmittels in dem Tiegel die Wirkung einer Druckbeaufschlagung beim Garen genutzt wird. Die zum Garen des Lebensmittels in dem Tiegel aufgewendete Wärmeenergie kann so effizienter genutzt werden. Darüber hinaus wird die für den Garprozeß benötigte Zeit verkürzt.

Eine zweckmäßige Ausgestaltung des Tiegels sieht vor, daß die Dichtmittel zumindest eine Dichtung umfassen, die in der geschlossenen Stellung des Deckels in einem Bereich zwischen einem oberen Rand des Garbehälters und dem Deckel angeordnet ist, wodurch die Abdichtung des Garraums zuverlässig und mit Hilfe einfacher Mittel erreicht wird.

Zur Optimierung der Bedingungen während des Garprozesses kann eine zweckmäßige Ausgestaltung der Erfindung vorsehen, daß einen Druckregeleinrichtung zum Regeln eines Überdrucks in dem Garraum über eine Öffnung mit dem Garraum in Verbindung steht. Mit Hilfe der Druckregeleinrichtung kann in dem Garraum ein gewünschter Überdruck eingestellt werden.

Ein kostengünstige und auch bei häufiger Nutzung zuverlässig arbeitende Ausführung der Druckregeleinrichtung ist bei einer zweckmäßigen Fortbildung der Erfindung dadurch erreicht, daß die Druckregeleinrichtung ein Magnetventil zum Dampfdruckabbau in dem Garraum umfaßt.

Eine bevorzugte Weiterbildung der Erfindung sieht vor, daß die Druckregeleinrichtung in einer Überdruckleitung angeordnet ist, die den Garraum und ein Ablöschraum eines Kondensatorbehälters verbindet. Auf diese Weise ist es ermöglicht, daß Wasserdampf, welcher über die Druckregeleinrichtung zum Überdruckabbau aus dem Garraum abgeführt wird, in den Ablöschraum des Kondensatorbehälters überführt wird und dort kondensiert. Hierbei entstehendes Wasser kann dann wiederverwendet werden.

Vorteilhaft kann bei einer Ausgestaltung der Erfindung vorgesehen sein, daß an den Ablöschraum des Kondensatorbehälters eine Überdruckabbaueinrichtung angeschlossen ist. Mit Hilfe der Überdruckabbaueinrichtung kann verhindert werden, daß sich aufgrund einer Druckentlüftung über die Druckregeleinrichtung aus dem Garraum in den Ablöschraum ein nicht gewünschter Überdruck in dem Ablöschraum aufbaut.

Zur Optimierung des Garprozesses sieht eine vorteilhafte Ausführungsform der Erfindung vor, daß die Druckregeleinrichtung und/oder die Überdruckabbaueinrichtung zur Regelung von Druckbedingungen in dem Garraum und/oder dem Ablöschraum an eine elektronische Steuereinrichtung angeschlossen sind. Mit Hilfe der elektronischen Steuereinrichtung können die Druckregeleinrichtung und die Überdruckabbaueinrichtung jeweils so gesteuert werden, daß im Garraum für die Zubereitung des Lebensmittels optimierte Druckbedingungen eingestellt werden.

Eine weitere Optimierung der Bedingungen für den Garprozeß ist bei einer zweckmäßigen Weiterbildung der Erfindung dadurch erreicht, daß die elektronische Steuereinrichtung an eine Wasserzuführeinrichtung zum Einführen von Wasser in dem Garraum gekoppelt ist. Mit Hilfe des Zuführens von Wasser in den Garraum und hieraus beim Erhitzen entstehendem Wasserdampf kann eine zusätzliche Beeinflussung des Drucks im Garraum erfolgen.

Vorteilhafter Weise kann erfindungsgemäß auch vorgesehen sein, daß die Druckregeleinrichtung und/oder die Überdruckabbaueinrichtung zur Regelung von Druckbedingungen in dem Garraum und/oder dem Ablöschraum mit einem Sensor, insbesondere Drucksensor, in Wirkverbindung stehen.

Dabei wird auch vorgeschlagen, daß der Sensor in den Garraum oder in den Ablöschraum mündet.

Eine vorteilhafte Ausgestaltung der Erfindung sieht vor, daß ein an den Garraum angeschlossener Reinigungskreislauf zum Reinigen des Garraums gebildet ist, wobei der Reinigungskreislauf eine Speiseleitung zum Einbringen einer ersten Reinigungsflüssigkeit in dem Garraum und einen mit dem Garraum in Verbindung stehenden Ablauf zum Abführen einer zweiten Reinigungsflüssigkeit aus dem Garraum aufweist und wobei der Ablöschraum als Bestandteil des Reinigungskreislaufes an die Speiseleitung und den Ablauf gekoppelt ist. Auf diese Weise wird das aufgrund einer Kondensation von Wasserdampf, der aus dem Garraum wegen Überdruck abgeleitet wird, in dem Ablöschraum entstehende Wasser für die Reinigung des Garraums verwendbar. Die Nutzung des Reinigungskreislaufes verbessert die Energiebilanz bei der Nutzung des Tiegels. Wasser wird insgesamt effizienter genutzt, was die Umweltbelastung vermindert. Im Falle der Zirkulation einer Reinigungsflotte entspricht die zweite Reinigungsflüssigkeit im Wesentlichen der ersten Reinigungsflüssigkeit.

Bei einer zweckmäßigen Ausführungsform der Erfindung kann vorgesehen sein, eine Pumpeinrichtung zum Fördern der ersten und/oder zweiten Reinigungsflüssigkeit aus dem Ablöschraum über die Speiseleitung in den Garraum. Hierdurch ist es ermöglicht, die Anordnung des Ablöschraum relativ zum Garraum den jeweiligen Anwendungsbedingungen entsprechend zu wählen, beispielsweise auch unterhalb des Garraums, da die Förderung der Reinigungsflüssigkeit mit Hilfe der Pumpe erfolgt.

Um einen nicht gewünschten Einfluß der an den Garraum angeschlossenen Speiseleitung auf die Druckbedingungen im Garraum zu verhindern, sieht eine bevorzugte Ausführungsform der Erfindung vor, daß in der Speiseleitung ein Rückschlagventil angeordnet ist, was eine Druckentweichung über die Speiseleitung im wesentlichen verhindert.

Die von Anspruch 15 abhängigen Ansprüche 16 bis 20 betreffend ein Verfahren zum Garen einer Speise mit Hilfe des Tiegels und weisen die in Verbindung mit den zugehörigen Vorrichtungsansprüchen genannten Vorteile entsprechend auf.

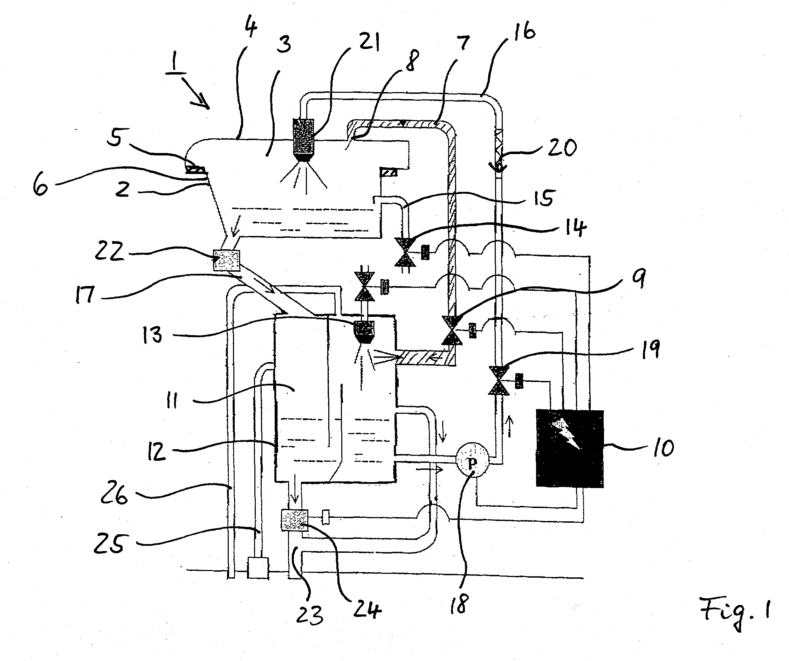

Die Erfindung wird im folgenden anhand von Ausführungsbeispielen unter Bezugnahme auf Figur 1 näher erläutert. Hierbei zeigt Figur 1 eine schematische Darstellung einer Anordnung mit einem Tiegel.

Gemäß Figur 1 umfaßt ein Tiegel 1 einen Garbehälter 2, in welchem ein Garraum 3 gebildet ist, sowie einen Deckel 4 zum Öffnen/Verschließen des Garraums 3. Um den Garraum 3 mit Hilfe des Deckels 4 zum Einbringen/Herausnehmen eines zu garenden Lebensmittels zu öffnen/zu schließen, ist der Deckel 4 verlagerbar ausgeführt, so daß der Deckel 4 zwischen einer geöffneten Stellung, in welcher der Garraum 3 nach oben offen ist, und einer geschlossenen Stellung verlagert werden kann, in welcher der Deckel 4 den Garraum 3 abdeckt, wie dies in Figur 1 gezeigt ist. Zu diesem Zweck kann der Deckel 4 schwenkbar an dem Garbehälter 2 montiert sein. In der in Figur 1 dargestellten, geschlossenen Stellung des Deckels 4 wird der Garraum 3 überdruckdicht verschlossen. Die Druckdichtheit wird hierbei insbesondere mit Hilfe einer Dichtung 5 erreicht, die in der geschlossenen Stellung des Deckels 4 in einem Bereich zwischen einem oberen Rand 6 des Garbehälters 2 und dem Deckel 4 angeordnet ist. Bei der Dichtung 5 kann es sich beispielsweise um eine Gummidichtung handeln, die an dem Garbehälter 2 oder dem Deckel 4 gehalten wird. Der mit Hilfe des Deckels 4 in der geschlossenen Stellung überdruckdicht abgeschlossene Garraum 3 ermöglicht ein Druckgaren des in dem Garraum 3 eingebrachten Lebensmittels (nicht dargestellt) während des Garprozesses.

Um den Druck in dem Garraum 3 während des Druckgarens aufzubauen und einstellen zu können, ist eine Verbindungsleitung 7 mit einer Öffnung 8 in dem Deckel 4 verbunden, so daß Überdruckdampf durch die Verbindungsleitung 7 zu einem Magnetventil 9 für den Dampfabbau gelangen kann. Das Magnetventil 9 wird mit Hilfe einer elektronischen Steuereinrichtung 10 gesteuert, um Überdruckdampf über die Verbindungsleitung 7 in einen Ablöschraum 11 abzuleiten, der in einem Kondensatorkasten 12 gebildet ist. In dem Ablöschraum 11 kondensiert der über die Verbindungsleitung 7 eingeleitete Wasserdampf zu Wasser. Um den Aufbau eines nicht gewünschten Überdrucks in dem Ablöschraum 11 zu verhindern, ist an den Ablöschraum 11 eine Druckabbaueinrichtung 13 angeschlossen, bei der es sich insbesondere um eine Düse für Dampfabbau handeln kann.

Die Druckabbaueinrichtung 13 ist ebenfalls an die elektronische Steuereinrichtung 10 gekoppelt. Mit Hilfe der elektronischen Steuereinrichtung 10 können auf diese Weise in dem Garraum 3 und dem Ablöschraum 11 jeweilige Druckbedingungen eingestellt werden, die einen optimalen Garprozeß gewährleisten. Zu diesem Zweck ist die elektronische Steuereinrichtung 10 gemäß Figur 1 weiterhin mit einer Wasserzuführeinrichtung 14 in einer Wasserzuführleitung 15 gekoppelt. Über die Wasserzuführleitung 15 kann Wasser in dem Garraum 3 eingebracht werden, welches bei erhitztem Garbehälter 2 wenigstens teilweise verdampft und zum Druckaufbau in dem Garraum 3 beiträgt.

Der Garraum 3 ist in einen Reinigungskreislauf integriert, welcher eine Speiseleitung 16 und eine Ablaufleitung 17 umfaßt. Die Speiseleitung 16 verbindet den Ablöschraum 11 mit dem Garraum 3, wobei sich in der Speiseleitung 16 eine Pumpe 18, eine Ventileinrichtung 19 sowie ein Rückschlagventil 20 befinden. Mit Hilfe der Pumpe 18 wird Reinigungsflüssigkeit, insbesondere Wasser, aus dem Ablöschraum 11 über die Speiseleitung 16 in den Garraum 3 gefördert. Hierbei durchströmt die Reinigungsflüssigkeit die Ventileinrichtung 19, welche mit der elektronischen Steuereinrichtung 10 verbunden ist, und das Rückschlagventil 20 sowie eine Düse 21, über die die Reinigungsflüssigkeit in den Garraum 3 eingebracht wird. Nachdem mit Hilfe der eingespritzten Reinigungsflüssigkeit der Garraum 3 gereinigt wurde, gelangt verbrauchte Reinigungsflüssigkeit, welche Rückstände des Garprozesses umfaßt, durch die Ablaufleitung 17 über ein Ablaufventil 22 in den Ablöschraum 11. Beim Reinigen aus dem Garraum 3 in den Ablöschraum 11 gelangende Schmutzpartikel können aus dem Ablöschraum 11 über einen Ausgang 23 abgeleitet werden. Zum Öffnen/Schließen des Ausgangs 23 ist Ventil 24 vorgesehen, welches ebenfalls an die elektronische Steuereinrichtung 10 gekoppelt ist. Mit Hilfe des Reinigungskreislaufes und der Anbindung der Verbindungsleitung 7 an den Ablöschraum 11 ist es möglich, Wasser, was infolge der Kondensation von Überdruckdampf aus dem Garraum 3 in dem Ablöschraum 11 gebildet wird, zur Reinigung des Garraums 3 zu nutzen.

Der Kondensatorkasten 12 verfügt gemäß Figur 1 weiterhin über einen Überlauf 25 sowie eine Belüftung 26, die jeweils mit dem Ablöschraum 11 in Verbindung stehen.

Bei der in Figur 1 dargestellten Anordnung mit dem Tiegel 1 ist es möglich, die Bedingungen für das Druckgaren in dem Garraum 3 mit Hilfe der elektronischen Steuerung 10 umfassend und den komplexen Wirkbeziehungen zwischen den Elementen der Anordnung entsprechend zu regulieren. Die effiziente Nutzung der zum Garen eingeleiteten Energie wird insbesondere mit Hilfe des Druckgarens und der hierfür vorgesehenen Regelung der Druckbedingungen unterstützt.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Tiegel (1) zum Garen eines Lebensmittels, mit einem Garraum (3), welcher in einem Garbehälter (2) gebildet ist, und einem Deckel (4), der zwischen einer geöffneten Stellung, in welcher der Garraum (3) geöffnet ist, und einer geschlossenen Stellung verlagerbar ist, in welcher der Garraum (3) geschlossen ist, **gekennzeichnet durch** Dichtmittel zum überdruckdichten Schließen des Garraums (3), wenn der Deckel (4) in der geschlossenen Stellung ist, so daß in dem Garraum (3) ein Druckgaren des Lebensmittels ausgeführt werden kann.

2. Tiegel (1) nach Anspruch 1, **dadurch gekennzeichnet, daß**
die Dichtmittel zumindest eine Dichtung (5) umfassen, die in der geschlossenen Stellung des Deckels (4) in einem Bereich zwischen einem oberen Rand (6) des Garbehälters (2) und dem Deckel (4) angeordnet ist.

3. Tiegel (1) nach Anspruch 1 oder 2, **dadurch gekennzeichnet, daß**
eine Druckregeleinrichtung (9) zum Regeln eines Überdrucks in dem Garraum (3) über eine Öffnung (8) mit dem Garraum (3) in Verbindung steht.

4. Tiegel (1) nach Anspruch 3, **dadurch gekennzeichnet, daß**
die Druckregeleinrichtung (9) ein Magnetventil zum Dampfdruckabbau in dem Garraum (3) umfaßt.

5. Tiegel (1) nach Anspruch 3 oder 4, **dadurch gekennzeichnet, daß**
die Druckregeleinrichtung (9) in einer Überdruckleitung (7) angeordnet ist, die den Garraum (3) und einen Ablöschraum (11) eines Kondensatorbehälters (12) verbindet.

6. Tiegel (1) nach Anspruch 5, **dadurch gekennzeichnet, daß**
an den Ablöschraum (11) des Kondensatorbehälters (12) eine Überdruckabbaueinrichtung (13) angeschlossen ist.

7. Tiegel (1) nach einem der Ansprüche 3 bis 6, **dadurch gekennzeichnet, daß**
die Druckregeleinrichtung (9) und/oder die Überdruckabbaueinrichtung (13) zur Regelung von Druckbedingungen in dem Garraum (3) und/oder dem Ablöschraum (11) an eine elektronische Steuereinrichtung (10) angeschlossen sind.

8. Tiegel (1) nach Anspruch 7, **dadurch gekennzeichnet, daß**
die elektronische Steuereinrichtung (10) an eine Wasserzuführeinrichtung (14, 15) zum Einführen von Wasser in dem Garraum (3) gekoppelt ist.

9. Tiegel (1) nach einem der Ansprüche 3 bis 8, **dadurch gekennzeichnet, daß**
die Druckregeleinrichtung (9) und/oder die Überdruckabbaueinrichtung (13) zur Regelung von Druckbedingungen in dem Garraum (3) und/oder dem Ablöschraum (11) mit einem Sensor, insbesondere Drucksensor, in Wirkverbindung stehen.

10. Tiegel (1) nach Anspruch 9, **dadurch gekennzeichnet, daß**
der Sensor in den Garraum (3) oder in den Ablöschraum (11) mündet.

11. Tiegel (1) nach einem der Ansprüche 5 bis 10, **dadurch gekennzeichnet, daß**
ein an den Garraum (3) angeschlossener Reinigungskreislauf zum Reinigen des Garraums (3) gebildet ist, wobei der Reinigungskreislauf eine Speiseleitung (16) zum Einbringen einer ersten Reinigungsflüssigkeit in dem Garraum (3) und einen mit dem Garraum (3) in Verbindung stehenden Ablauf (17) zum Abführen einer zweiten Reinigungsflüssigkeit aus dem Garraum (3) aufweist und wobei der Ablöschraum (11) als Bestandteil des Reinigungskreislaufes an die Speiseleitung (16) und den Ablauf (17) gekoppelt ist.

12. Tiegel (1) nach Anspruch 11, **gekennzeichnet durch**
eine Pumpeinrichtung (18) zum Fördern der ersten und/oder zweiten Reinigungsflüssigkeit aus dem Ablöschraum (11) über die Speiseleitung (16) in den Garraum (3).

13. Tiegel (1) nach Anspruch 11 oder 12, **gekennzeichnet durch**
ein in der Speiseleitung (16) angeordnetes Rückschlagventil (20).

14. Tiegel (1) nach einem der vorangehenden Ansprüche, **dadurch gekennzeichnet, daß**
der Tiegel kippbar oder verschwenkbar ist.

15. Verfahren zum Garen eines Lebensmittels mit Hilfe eines Tiegels (1), insbesondere nach einem der vorangehenden Ansprüche, wobei der Tiegel (1) einen in einem Garbehälter (2) gebildeten Garraum (3) und einen Deckel (4) aufweist, wobei der Deckel (4) zwischen einer geöffneten Stellung, in welcher der Garraum (3) geöffnet ist, und einer geschlossenen Stellung verlagerbar ist, in welcher der Garraum (3) geschlossen ist, **dadurch gekennzeichnet, daß**
der Deckel (4) in die geschlossenen Stellung gebracht, der Garraum (3) mit Hilfe von Dichtmitteln überdruckdicht verschlossen und das Lebensmittel in dem Garraum (3) mittels Druckgaren gegart wird.

16. Verfahren nach Anspruch 15, **dadurch gekennzeichnet, daß**
Druckbedingungen in dem Garraum (3) beim Druckgaren mit Hilfe einer Druckregeleinrichtung (9) geregelt wird.

17. Verfahren nach Anspruch 16, **dadurch gekennzeichnet, daß**
Überdruck mit Hilfe der Druckregeleinrichtung (9) über eine Verbindungsleitung (7) aus dem Garraum (3) in einen Ablöschraum (11) einer Kondensatoreinrichtung (12) abgeleitet wird.

18. Verfahren nach Anspruch 17, **dadurch gekennzeichnet, daß**
Überdruck in dem Ablöschraum (11) mit Hilfe einer Überdruckabbaueinrichtung (13) abgebaut wird.

19. Verfahren nach Anspruch 17 oder 18, **dadurch gekennzeichnet, daß**
in einem Reinigungskreislauf eine erste Reinigungsflüssigkeit aus dem Ablöschraum (11) in den Garraum (3) gefördert wird und eine zweite Reinigungsflüssigkeit aus dem Garraum (3) über einen Ablauf (17) in den Ablöschraum (11) abgeleitet wird.

20. Verfahren nach einem der Ansprüche 16 bis 19, **dadurch gekennzeichnet, daß**
Druckbedingungen in dem Garraum (3) und/oder dem Ablöschraum (11) mit Hilfe einer elektronischen Steuereinrichtung (10), einschließlich einem Sensor, geregelt werden, die mit der Druckregeleinrichtung (9) und der Überdruckabbaueinrichtung (13) gekoppelt ist.
